# EUROPÄISCHE PATENTSCHRIFT

(11) **EP 1 522 470 B1**
(45) Veröffentlichungstag und Bekanntmachung des Hinweises auf die Patenterteilung: **30.08.2006**
(21) Anmeldenummer: 04001899.6
(22) Anmeldetag: 29.01.2004
(51) Int. Cl.: B60R 21/34, B60N 2/48

(54) **Überrollschutzsystem für Kraftfahrzeuge, das einen ausfahrbaren Überrollkörper mit kombinierter Kopfstütze aufweist**
Rollover protection system for vehicles comprising a deployable arch combined with a headrest
Systéme de protection pour capotage avec un arceau deploiable combiné avec un appui-tête

(30) Priorität: 07.10.2003 DE 10346402
(43) Veröffentlichungstag der Anmeldung: 13.04.2005
(73) Patentinhaber: ISE Innomotive Systems Europe GmbH, 51702 Bergneustadt (DE)
(72) Erfinder: Schulte, Michael, 57462 Olpe/Biggesee (DE); Dörre, Wolfgang, 51647 Gummersbach (DE)
(74) Vertreter: Fuchs Mehler Weiss & Fritzsche

(56) Entgegenhaltungen:
- EP-A- 0 504 482
- EP-A- 1 488 965
- DE-A- 3 905 470
- US-A- 5 205 585

## Beschreibung

Die Erfindung bezieht sich auf ein Überrollschutzsystem für Kraftfahrzeuge, das fahrzeugsitzbezogen einen sensorgesteuert ausfahrbaren Überrollkörper mit kombinierter, eigenständig verstellbarer Kopfstütze aufweist, und das eine lösbare Verriegelungseinrichtung für den ausgefahrenen Überrollkörper sowie eine lösbare Verriegelungseinrichtung für die jeweilige Stellposition der Kopfstütze besitzt.

Überrollschutzsysteme mit Überrollkörper dienen zum Schutz der Insassen in Kraftfahrzeugen ohne schützendes Dach, typischerweise in Cabriolets oder Sportwagen, bei einem Überschlag, weil das Fahrzeug dann über den Überrollkörper abrollt.

Es ist dabei bekannt, einen die gesamte Fahrzeugbreite überspannenden, fest installierten Überrollbügel als Überrollkörper vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten Überrollbügel zuzuordnen. Diese Lösung wird typischerweise bei Sportwagen zur Unterstreichung des sportlichen Aussehens eingesetzt.

Am Markt gewinnen daher bei Cabriolets immer mehr konstruktive Lösungen an Bedeutung bei denen der Überrollkörper im Normalzustand eingefahren ist und im Gefahrenfall, also bei einem drohenden Überschlag, schnell in eine schützende Position ausgefahren wird, um zu verhindern, dass die Fahrzeuginsassen durch das sich überschlagende Fahrzeug erdrückt werden.

Diese Überrollschutzsysteme weisen typischerweise einen in einem fahrzeugfesten Führungskörper geführten U-förmigen oder aus einem Profilkörper gebildeten Überrollkörper auf, wobei der Führungskörper in einem Kassetten-Gehäuse befestigt ist. Dieser Überrollkörper wird im Normalzustand gegen die Vorspannkraft einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in Wirkeingriff tretende Verriegelungseinrichtung, die Wiedereinfahrsperre, ein Eindrücken des Überrollbügels verhindert. Dabei ist typischerweise jedem Fahrzeugsitz eine Kassette zugeordnet.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den so genannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollkörper und das andere fahrzeugfest verbunden ist.

Eine derartige, fahrzeugsitzbezogene Kassetten-Konstruktion eines Überrollbügelschutzsystems mit einem U-förmigen Überrollbügel zeigt beispielsweise die DE 43 42 400 A1; eine alternative Kassetten-Konstruktion mit einem Überrollkörper in Form eines Profilkörpers zeigt insbesondere DE 198 38 989 C1.

Wenn der Überrollkörper mit seiner Kassette unmittelbar hinter dem Fahrzeugsitz angebracht ist, befindet er sich in unmittelbarer räumlicher Nähe zu der Kopfstütze, die typischerweise oben auf der Rückenlehne höhenverstellbar angebracht ist, damit sie in eine für die Insassen komfortable bzw. sicherheitsmäßig notwendige Position bringbar ist. Es bietet sich daher an, die Kopfstütze mit dem Überrollkörper zu kombinieren.

Es sind verschiedene konstruktive Lösungen für die Kombination bzw. Integration der Kopfstütze mit dem Überrollkörper bekannt geworden, wie sie insbesondere in DE 38 22 461 C2, DE 39 27 265 A1,
DE 39 30 171 C2, DE 100 26 978 C1 und der gattungsgemäßen DE 196 50 593 (= EP 0 850 808) beschrieben werden.

So zeigt insbesondere die vorgenannte DE 38 22 461 C2 einen aufstellbaren U-förmigen Überrollbügel, an dessen Schenkeln die Kopfstütze unabhängig von der Aufstellung des Überrollkörpers höhenverschiebbar in verschiedene Stellpositionen angebracht ist. Die Höhenverstellung der Kopfstütze erfolgt dabei im bekannten Fall mittels eines separaten Antriebes, dem sogenannten Komfort-Antrieb. Bei einer derartigen Konstruktion, die relativ aufwändig ist, ist es typbedingt notwendig, bei der Auslösung der Aufstellbewegung des in der fahrzeugfesten Kassette geführten Überrollkörpers den separaten Antrieb abzukoppeln, was die Konstruktion zusätzlich verkompliziert.

Es ist auch bekannt, die Kopfstütze mit ihren eigenen Tragstangen unabhängig vom Überrollkörper manuell in verschiedene Stellpositionen verstellbar in der Kassette anzubringen, in Verbindung mit einer gestuften Verrastung, durch welche die Kopfstütze in der gewünschten Stellposition lösbar einrasten kann.
Die Verrastung weist typischerweise an mindestens einer Tragstange der Kopfstütze eine zahnstangenartige Folge von Einkerbungen sowie ein fahrzeugfest in der Kassette bewegbar angebrachtes, federvorgespanntes Sperrelement auf, das im lösbaren verriegelnden Wirkeingriff mit der jeweiligen Einkerbung steht. Beim Ausziehen der Kopfstütze ratschen die Einkerbungen über das Sperrelement, wogegen zum Rückstellen der ausgezogenen Kopfstütze das Sperrelement aus dem Wirkeingriff mit der jeweiligen Einkerbung gebracht, d.h. entriegelt werden muß. Diese Entriegelung erfolgt mittels eines kleinen Elektromotors, der mit dem Sperrelement gekoppelt ist, und der im aktivierten Zustand das Sperrelement aus der Verriegelung mit der Einkerbung gegen die Kraft der zugehörigen Vorspannfeder zieht. Der elektrische Impuls für die Aktivierung des Motors wird mittels eines Tastschalters am Armaturenbrett gegeben. Dieser kleine Motor ist dabei aus Kostengründen nur für einen absoluten Kurzzeitbetrieb von 1 Sekunde mit folgender Pause von 10 Minuten ausgelegt.

Zum manuellen Reversieren des aufgestellten Überrollkörpers selbst muß die Wiedereinfahrsperre manuell entriegelt werden. Dazu ist im Polster der Lehne des zugeordneten Fahrzeugsitzes ein Hebel versteckt angeordnet, der bei manueller Betätigung auf die Rastklinke der Verriegelungseinrichtung im entriegelnden Sinne einwirkt.

Die bekannte Konstruktion, von der die Erfindung ausgeht, ist hinsichtlich der Kombination der Kopfstütze mit dem Überrollbügel entsprechend der vorgenannten gattungsgemäßen DE 196 50 593 A1 so getroffen, daß die Kopfstütze beim Aufstellen des Überrollkörpers angeschoben bzw. mitgenommen wird. Bei einer ungewollten Crash-Auslösung werden daher der Überrollkörper und die Kopfstütze gemeinsam in die oberste Position, die Schutzstellung, befördert, und müssen dann beide von den Fahrzeuginsassen manuell reversiert werden.

Zur Reversierung können jedoch nicht zeitgleich innerhalb des durch den E-Motor vorgegebenen kleinen Zeitfensters der im Polster der Lehne versteckte Hebel für die manuelle Entriegelung des Überrollkörpers und auch der Tastschalter am Armaturenbrett zur Entriegelung der Kopfstütze gemeinsam betätigt werden.

Der Erfindung liegt die Aufgabe zugrunde, das vorstehend beschriebene bekannte und eingangs bezeichnete Überrollschutzsystem hinsichtlich der Entriegelung von Kopfstütze und Überrollkörper nach einer gemeinsamen Aufstellung derselben so auszubilden, daß die Verriegelungen für Kopfstütze und Überrollkörper gemeinsam und damit gleichzeitig für eine Reversierung manuell entriegelt werden können.

Die Lösung dieser Aufgabe gelingt bei einem Überrollschutzsystems für Kraftfahrzeuge, das fahrzeugsitzbezogen einen sensorgesteuert ausfahrbaren Überrollkörper mit kombinierter, eigenständig verstellbarer Kopfstütze aufweist, und das eine lösbare Verriegelungseinrichtung für den ausgefahrenen Überrollkörper sowie eine lösbare Verriegelungseinrichtung für die jeweilige Stellposition der Kopfstütze besitzt, gemäß der Erfindung dadurch, daß eine drehbetätigbare, fahrzeugfest gelagerte Welle vorgesehen ist, die mit mindestens zwei abgehenden Hebeln in Dreh-Wirkverbindung steht, von denen der erste Hebel in lösende Wirkverbindung mit der Verriegelungseinrichtung für den Überrollkörper und der zweite Hebel in lösende Wirkverbindung mit der Verriegelungseinrichtung für die Kopfstütze bringbar ist.

Durch die manuelle und/oder elektromotorische Betätigung nur eines Bauelementes, der Welle, können daher auf einfache Weise die Verriegelungseinrichtungen für Kopfstütze und Überrollkörper gemeinsam, d.h. gleichzeitig entriegelt werden.

Ausgestaltungen der Erfindung sind in Unteransprüchen gekennzeichnet sowie ergeben sich aus der Figurenbeschreibung.

Anhand von zwei in den Zeichnungen jeweils in verschiedenen Ansichten dargestellten Ausführungsbeispielen wird die Erfindung näher beschrieben.

Es zeigen:
- Fig. 1: in einer isometrischen Darstellung den oberen Teil eines ersten Ausführungsbeispieles des erfindungsgemäßen Überrollschutz-Kassettensystems mit einem U-förmigen, in einem fahrzeugfesten Führungsblock aufstellbar gehalterten Überrollkörper und damit kombinierter Kopfstütze sowie mit einem drehbar im Führungsblock angelenkten Entriegelungshebel für die gemeinsame Entriegelung von Überrollkörper und Kopfstütze,
- Fig. 2: eine Darstellung nach Fig. 1 mit abgenommenem vorderen Kassetten-Abdeckblech im Führungsblock unter Darstellung der Komponenten für die Verriegelungseinrichtungen von Kopfstütze und Überrollbügel im verriegelten Zustand sowie für deren Entriegelung,
- Fig. 3: eine Darstellung nach Fig. 2 im entriegelten Zustand von Überrollkörper und Kopfstütze,
- Fig. 4: in einer Ausschnitt-Darstellung den Aufbau der Entriegelungseinrichtung für die Entriegelung der Kopfstütze, die eine Verriegelungseinrichtung mit einem Verriegelungsschieber besitzt,
- Fig. 5: in einer schematischen Ausschnitt-Darstellung den Verriegelungsschieber nach Fig. 4 sowie die Komponenten für seine Verschiebung in die entriegelte Position,
- Fig. 6: in einer Ausschnitt-Darstellung aus Fig. 2 den verriegelten Zustand der Verriegelungseinrichtungen für Kopfstütze und Überrollkörper,
- Fig. 7: in einer Ausschnitt-Darstellung aus Fig. 3 den entriegelten Zustand der Verriegelungseinrichtungen für Kopfstütze und Überrollkörper,
- Fig. 8: in einer rückseitigen isometrischen Darstellung den Aufbau eines zweiten Ausführungsbeispieles einer gemeinsamen elektromotorischen Entriegelungseinrichtung unter besonderer Darstellung der Entriegelung der Kopfstütze,
- Fig. 9: eine schnittähnliche Frontansicht der Entriegelungseinrichtung nach Fig. 8 mit weggebrochenem Frontgehäuseteil unter besonderer Darstellung der Entriegelung des ausgefahrenen Überrollkörpers,
- Fig. 10: eine schnittähnliche Rückansicht der Einrichtung nach Fig. 8 bzw. Fig. 9, und
- Fig. 11: in einer schematisierten Ausschnitt-Darstellung ein Hebelsystem für die Übertragung der Bewegung des Elektromotors auf die entriegelnden Komponenten.

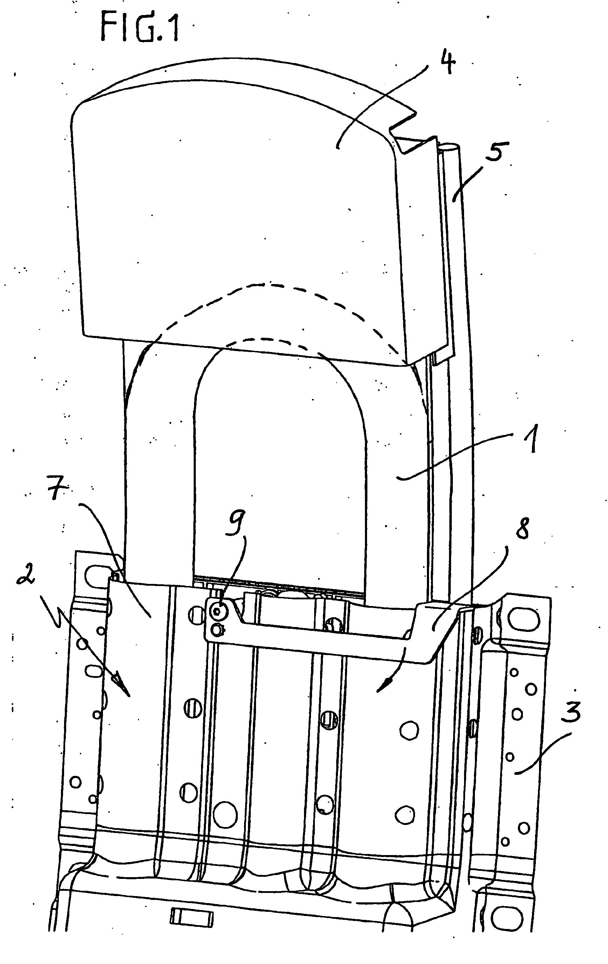

Die Figuren 1 bis 3 zeigen in jeweils einer isometrischen Ausschnitt-Darstellung den oberen Teil des sitzbezogenen erfindungsgemäßen Kassetten-Überrollschutzsystems mit einem aufstellbaren Überrollkörper, kombiniert mit einer Kopfstütze, hier einem U-förmigen Überrollbügel 1, der in einem fahrzeugfesten Führungsblock 2 der Kassette 3 geführt gehaltert ist. Grundsätzlich kann auch ein Überrollkörper aus einem Profilteil Anwendung finden.

Derartige aufstellbare Überrollschutzsysteme sind, wie eingangs dargelegt, in manigfaltigen Ausführungen bekannt und brauchen daher hier nicht näher erläutert werden. Der besseren Übersicht halber sind daher auch nicht die Komponenten Federspeicher und Haltevorrichtung, die typischerweise im unteren, nicht gezeigten Teil der Kassette angeordnet sind, dargestellt, zumal es bei der Erfindung auf die lösbare Verriegelung des Überrollbügels 1, die Wiedereinfahrsperre, und die lösbare Verriegelung der Kopfstütze einschließlich deren gemeinsame Entriegelung ankommt.

Die Figuren 1 - 3 zeigen das Kopfstützenoberteil dieser Kopfstütze, bestehend aus einem Blechgehäuse 4, an welches zwei Führungsstäbe oder Tragstangen 5, 6 angeschweißt sind, die ebenfalls in der Kassette 3 verstellbar geführt aufgenommen sind. Der Hohlraum des Blechgehäuses nimmt den Kopf des Überrollbügels 1 auf, und zwar sowohl bei abgelegter Kopfstütze als auch bei aufgestelltem Überrollbügel. Fährt der Überrollbügel aus, schiebt er somit die Kopfstütze mit in die obere Position. Diese Hohlkopfstütze wird in der eingangs genannten DE 196 50 593 A1 beschrieben.

Die Außenseiten des Blechgehäuses 4 werden später mit einem Polster umschäumt sowie mit einem Bezug verkleidet.

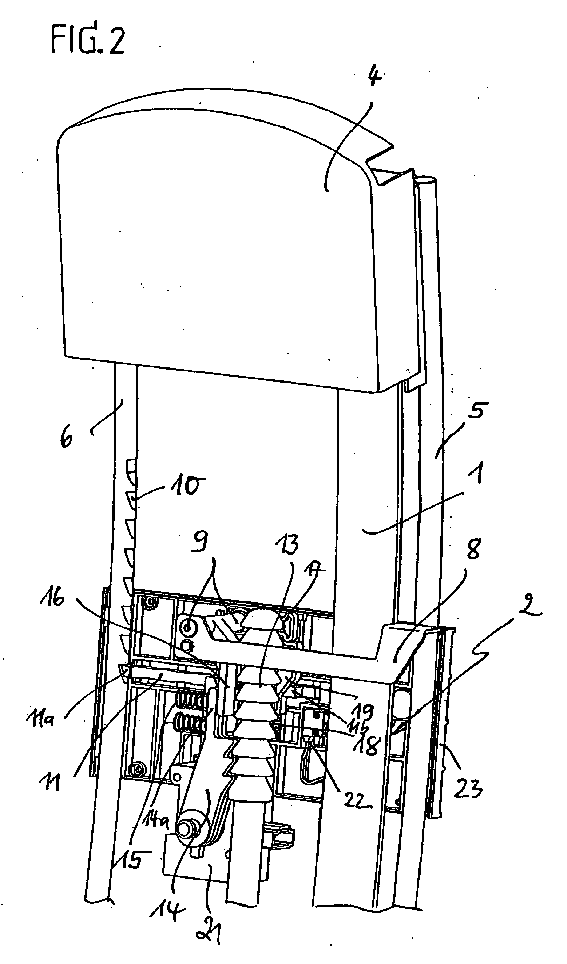

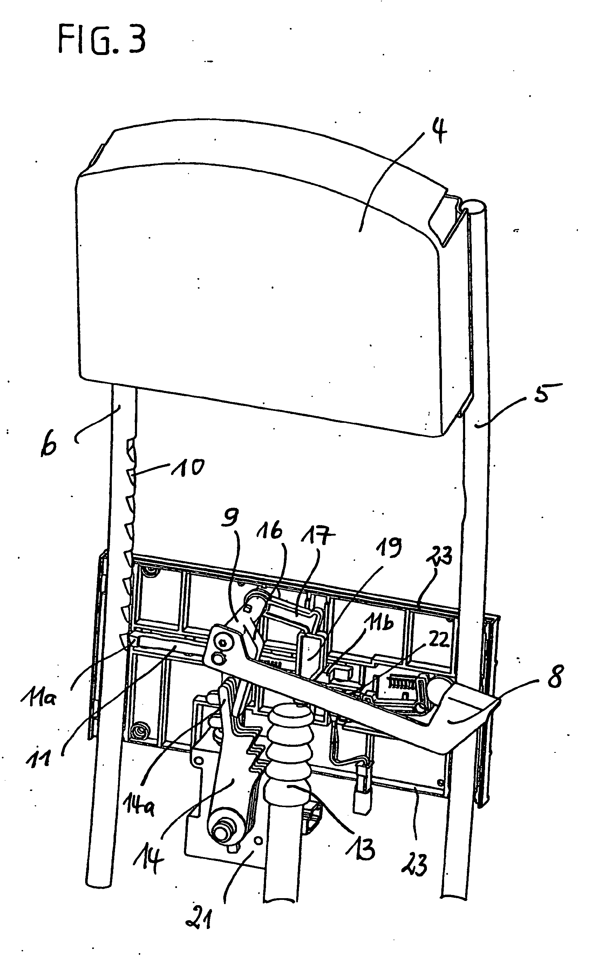

Das Innere des Führungsblockes 2 ist in Fig. 1 durch ein Kassetten-Abdeckblech 7 verdeckt, das in den Figuren 2 und 3 abgenommen ist und einen Blick in das Innere des Führungsblockes erlaubt. Die Fig. 1 zeigt jedoch bereits einen Hebel, den Entriegelungs- oder Reversierhebel 8, der drehfest auf einer drehbar im Führungsblock 2 gelagerten Welle 9 sitzt. Dieser manuell betätigbare Entriegelungshebel ist, wie noch näher erläutert werden wird, Teil der erfindungsgemäßen Einrichtung, mittels welcher der ausgefahrene und in der oberen Stellung verriegelte Überrollbügel gleichzeitig mit der Kopfstütze entriegelt werden kann. Der Entriegelungshebel besteht vorzugsweise aus einem Blechformteil und ist mittels einer mittigen Verschraubung und eines exzentrisch angebrachten Stiftes drehfest mit der Welle 9 verbunden.

Der Entriegelungshebel 8 ist versteckt im Lehnenpolster angeordnet, d.h. ist nicht direkt zugängig, so daß eine unbeabsichtigte Entriegelung praktisch nicht möglich ist. Er wird im praktischen Betrieb mittels eines angepassten Werkzeuges, das in eine entsprechende Aussparung des oberen Sitz- bzw. Lehnenpolsters eingeführt wird, in Pfeilrichtung drückend betätigt.

Die Figuren 2 und 3 zeigen aufgrund des abgenommenen Abdeckbleches 7 der Fig. 1 Einzelheiten der Verriegelung der Kopfstütze 4 und des Überrollbügels 1.

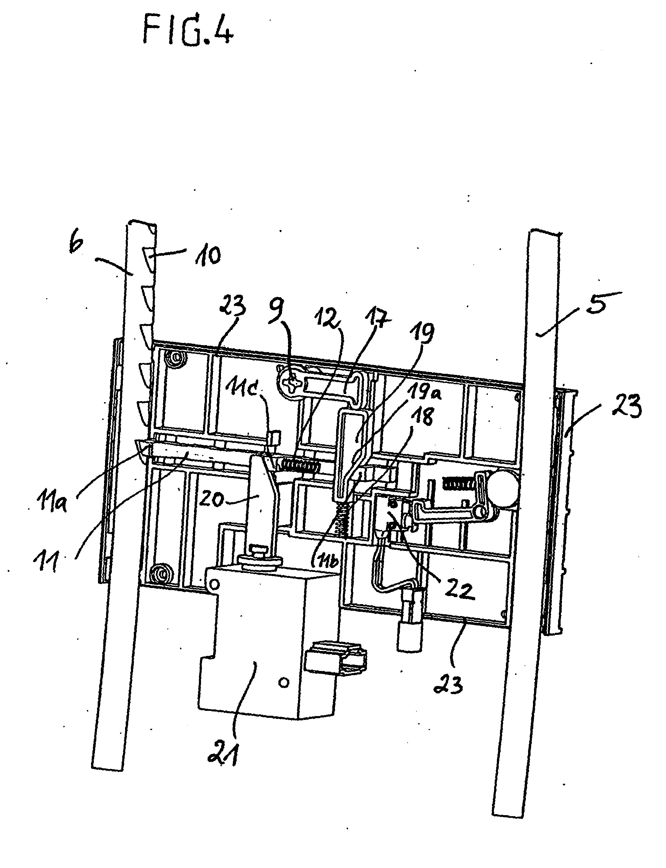

Die Verriegelung der Kopfstütze besteht aus einer Folge von Einkerbungen bzw. Rasten 10 an der Tragstange 6 in Verbindung mit einem horizontal linear beweglichen Verriegelungsschieber 11, der vorzugsweise aus Metall, insbesondere Feinguß, hergestellt ist, und der eine Verriegelungsnase 11 a für den verriegelnden Wirkeingriff mit den Einkerbungen 10 besitzt und unter der Vorspannung einer Feder 12 (Fig. 4) im verriegelnden Sinne steht.

Wird der Verriegelungsschieber 11 gegen die Vorspannkraft nach rechts bewegt, kommt die Verriegelungssnase 11 a außer Wirkeingriff mit den Einkerbungen 10; die Kopfstütze ist entriegelt und kann einfahren. Die Betätigung des Verriegelungsschiebers wird später noch näher erläutert.

Die Verriegelung des Überrollbügels 1 besteht in bekannter Weise aus einem mit dem Überrollbügel verbundenen Rastdorn 13 in Verbindung mit einer drehbar im Führungskörper 2 angelenkten Sperrklinke 14, die unter der Vorspannung zweier Klinkenfedem 15 steht, und einen Betätigungsarm 14 a aufweist. Die Fig. 2 zeigt dabei den verriegelten und die Fig. 3 den entriegelten Zustand.

Es versteht sich, daß die dargestellten Verriegelungssysteme zwar vorteilhaft, aber dennoch Ausführungsbeispiele darstellen. Sie können, wie zahlreiche Beispiele des Standes der Technik zeigen, auch anders ausgebildet sein. So kann zum Beispiel der Verriegelung der Kopfstütze anstelle des Verriegelungs-Schiebers 11 eine drehbar angelenkte Sperrklinke und der Verriegelung des Überrollbügels anstelle der Sperrklinke 14 ein linear bewegter Verriegelungsschieber zugeordnet sein.

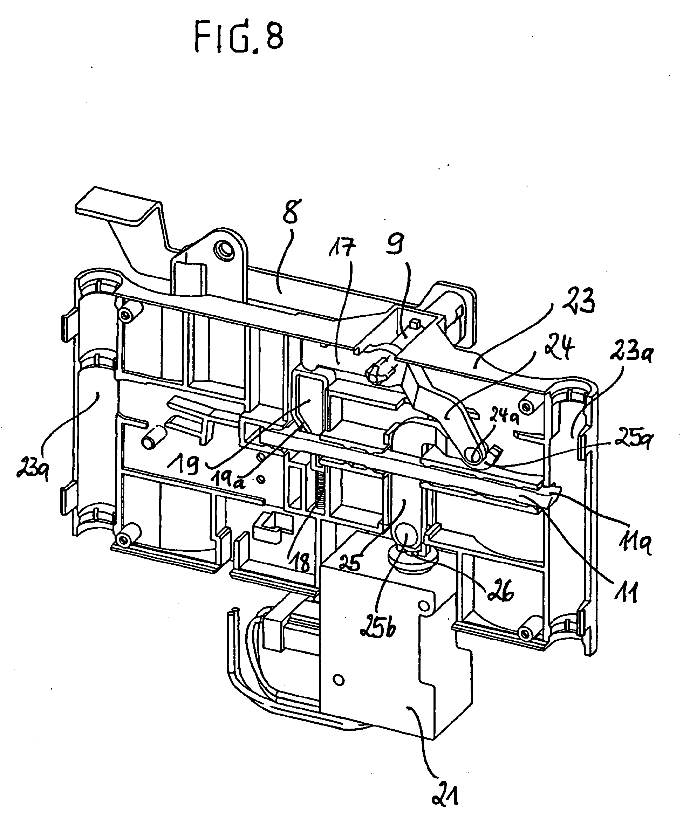

Für die entriegelnde Betätigung des Verriegelungsschiebers 11 und der Sperrklinke 14 werden nachstehend zwei Ausführungsformen dargestellt, mit einer ersten Ausführungsform in den Figuren 1 - 7 und einer zweiten Ausführungsform in den Figuren 8 -11.

Dem Entriegelungshebel 8, der drehfest auf der drehbar gelagerten Welle 9 sitzt, sind bei der ersten Ausführungsform zwei weitere abgehende Hebel, ein erster Hebel 16 und ein zweiter Hebel 17 zugeordnet, die beide ebenfalls auf der Welle 9 sitzen, wobei der erste Hebel 16 auf die Verriegelung 13, 14 des Überrollbügels 1 und der zweite Hebel 17 auf die Verriegelung 10, 11 der Kopfstütze 4 entriegelnd wirkt. Durch die manuelle Betätigung nur eines Hebels, des Entriegelungshebels 8, können beide Verriegelungen zeitgleich gemeinsam manuell entriegelt werden.

Bei den beiden abgehenden oder weiterleitenden Hebeln 16, 17 handelt es sich um Spritzguß- oder Feingussteile aus Kunststoff oder Metall, die vorzugsweise einstückig mit der Welle 9 oder mehrteilig ausgeführt sein können. Im letzteren Fall sind sie drehfest mit der Welle verbunden, z.B. mit mindestens einem radialen Stift.

Der erste Hebel 16 wirkt direkt auf den Betätigungsarm 14 a der Sperrklinke 14, wie insbesondere die Fig. 3 zeigt. Wird der Entriegelungshebel 8 nach unten gedrückt, verschwenkt der erste Hebel 16 im Uhrzeigersinn und drückt die Sperrklinke 14 außer Wirkeingriff mit dem Rastdorn 13.

Der zweite Hebel 17 wirkt, wie insbesondere auch die Figuren 3 und 4 erkennen lassen, auf einen vertikal geführten, durch eine Feder 18 vorgespannten ersten Entriegelungsschieber 19. Dieser Entriegelungsschieber besitzt eine Schräge 19 a, die mit einem komplementär abgeschrägten ersten Anschlag 11 b des Kopfstützen-Verriegelungs-Schiebers 11 im Wirkeingriff steht.

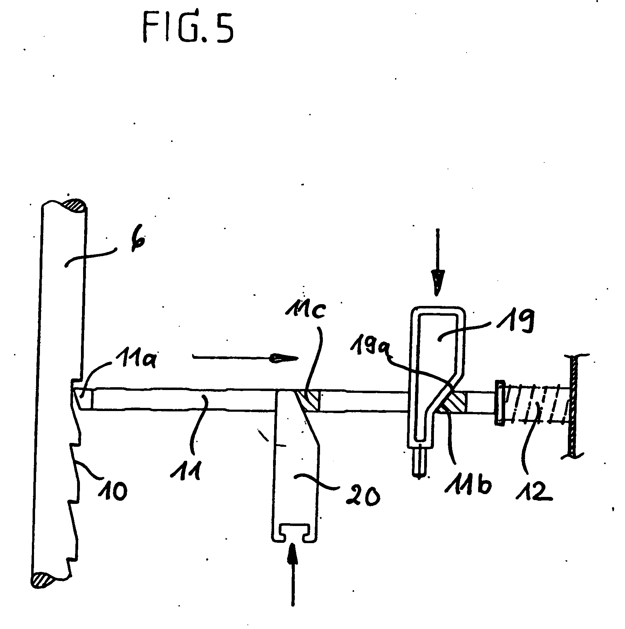

Beim Drücken des Entriegelungshebels 8 wird daher der zweite abgehende Hebel 17 im Uhrzeigersinn verschwenkt (Fig. 3), drückt vertikal auf den Entriegelungsschieber 19, der mit seiner Schräge 19 a den Kopfstützen-Entriegelungsschieber 11 über dessen ersten abgeschrägten Anschlag 11 b aus dem Wirkeingriff mit der jeweiligen Einkerbung 10 des Führungsstabes 6 der Kopfstütze 4 zieht. Die Kopfstütze ist damit entriegelt und kann einfahren (Figuren 4 und 5).

Der Entriegelungsschieber 11 besitzt einen zweiten abgeschrägten Anschlag 11 c für einen Wirkeingriff mit einem zweiten komplementär abgeschrägten Entriegelungsschieber 20 (Fig. 4). Dieser zweite Entriegelungsschieber 20 steht in Wirkverbindng mit einem Elektromotor, der einschließlich dem zugehörigen Getriebe im Gehäuse 21 untergebracht und der, wie eingangs beschrieben, nur für einen absoluten Kurzzeitbetrieb ausgelegt ist. Wird der Elektromotor durch Betätigen eines Tastschalters am Armaturenbrett aktiviert, fährt der zweite Entriegelungsschieber 20 aus und zieht über seine Schräge und den abgeschrägten Anschlag 11 c den Kopfstützen-Entriegelungsschieber 11 außer Wirkeingriff mit der jeweiligen Einkerbung 10 am Führungsstab 6. Ein "abgefederter" Endschalter 22 begrenzt dabei den Ausziehweg des Verriegelungsschiebers 11.

Mit dieser elektromotorischen Entriegelung der Kopfstütze kann die Kopfstütze 4 entriegelt werden, wenn diese nicht mehr, z.B. durch einen Wechsel eines Fahrgastes, in der jeweiligen Stellposition gebraucht wird, wogegen der Entriegelungshebel 8 dazu dient, beim aufgestellten Überrollbügel diesen gleichzeitig mit der Kopfstütze zu entriegeln. Nach der Entriegelung "fällt" die Kopfstütze in beiden Fällen durch ihr Eigengewicht ein.

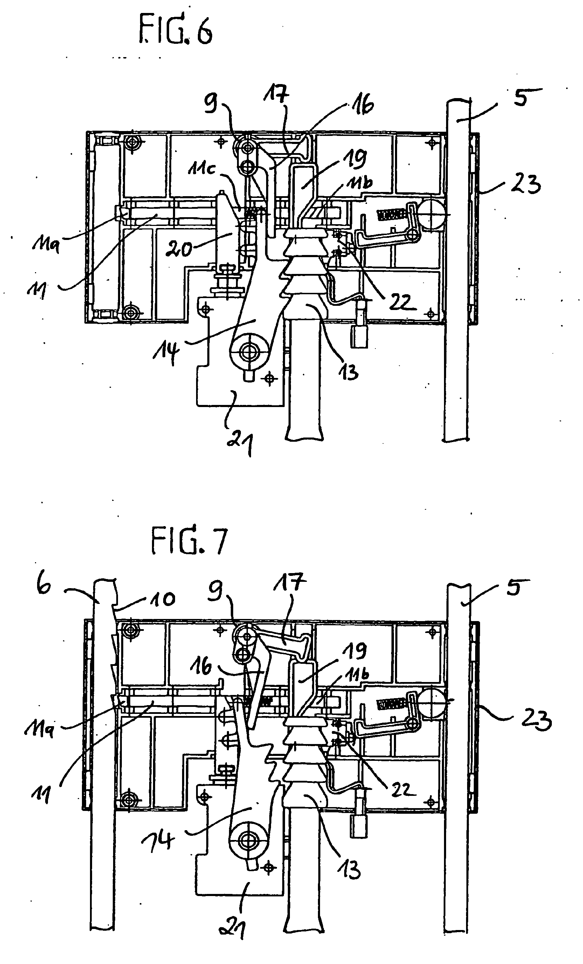

Die Figuren 6 und 7 zeigen nochmals in einer Art weggebrochener frontaler Darstellung die verschiedenen Zustände der Verriegelung (Fig. 6) und Entriegelung (Fig. 7).

Alle vorbeschriebenen Elemente sind in einem Kunststoffgehäuse 23 im Führungsblock 2 des Kassettensystems gelagert, das auch die Aufnahmen und Führungen der Wellen und Schieber besitzt.

Bei der bisher beschriebenen ersten Ausführungsform erfolgte die gleichzeitige Entriegelung von Kopfstütze und Überrollbügel nach einer ungewollten Auslösung im Fahrbetrieb rein manuell. Dazu musste vom Fahrzeugführer mit der einen Hand der Entriegelungshebel gedrückt und in der Entriegelungsstellung wegen fehlender Selbsthaltung gedrückt gehalten werden, und mit der anderen Hand der Überrollbügel gegen die Kraft der Aufstellfedern in die gespannte Grundstellung eingedrückt werden.

Da körperlich schwächere Personen Schwierigkeiten haben können, den Überrollbügel einhändig einzuschieben, sieht eine zweite Ausführungsform in einer Erweiterung der ersten Ausführungsform eine zeitgleiche, manuell ausgelöste elektrische Entriegelung vor, die es ermöglicht, den ausgefahrenen Überrollkörper beidhändig zu reversieren.

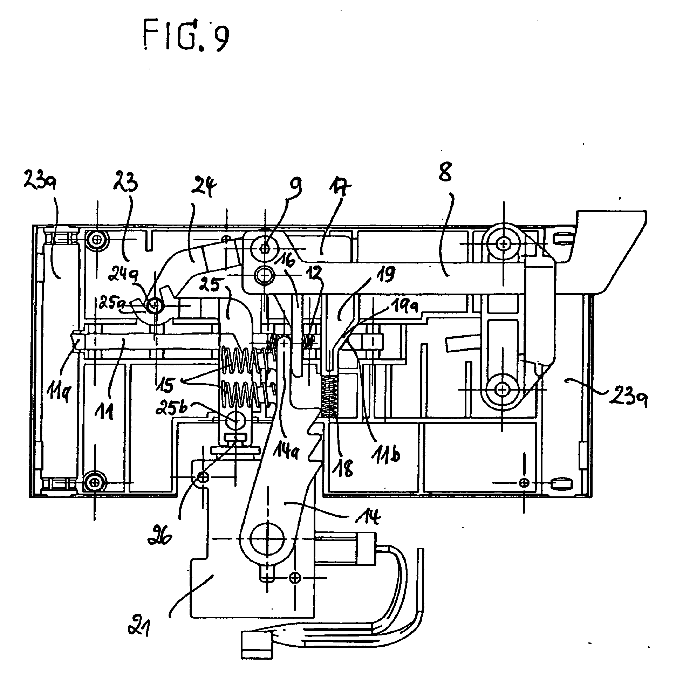

Die Fig. 8 zeigt in einer rückseitigen isometrischen Darstellung den Innenaufbau der Entriegelungseinrichtung nach der zweiten Ausführungsform in dem Gehäuse 23, das zwei Führungsschalen 23 a zur Führung der (nicht dargestellten) Tragstangen 5, 6 der Kopfstütze aufweist. In Fig. 8 ist dabei nur die entriegelnde Betätigung des Kopfstützen-Verriegelungsschiebers 11 mit der Verriegelungsnase 11 a dargestellt. Die Entriegelung der Überrollbügel-Wiedereinfahrsperre ist in Fig. 9 dargestellt.

Wie bei der ersten Ausführungsform ist im Gehäuse 23 die Welle 9 drehbar gelagert, an der zunächst der manuell betätigbare Entriegelungshebel 8 fest angebracht ist. Ebenso ist an der Welle 9 der zweite abgehende Hebel 17, der mit dem ersten, vertikal geführten Entriegelungsschieber 19 in lösender Wirkverbindung steht, angebracht. Dieser mittels der Feder 18 vorgespannte Entriegelungsschieber 19 wirkt, wie bei der ersten Ausführungsform, bei vertikaler Verschiebung nach unten mit seiner Schräge 19 a auf den ersten abgeschrägten Anschlag 11 b, am Verriegelungsschieber 11, der durch die Feder 12 vorgespannt ist, entriegelnd ein (siehe auch Fig. 9). In Erweiterung der ersten Ausführungsform ist auf der Welle 19 ein weiterer Betätigungs-Hebel 24 drehfest angebracht. Vorzugsweise bilden, wie dargestellt, die Hebel 17 und 24 einen einstückigen doppelseitigen Hebel, der seinerseits drehfest auf der Welle 9 aufgesteckt ist. Wie insbesondere auch die Fig. 11 zeigt, besitzt der Betätigungs-Hebel 24 an seinem freien Ende einen Bolzen 24 a, der in einer Klaue 25 a eines Winkelhebels 25 lösbar gehaltert ist. Der Winkelhebel seinerseits ist am Abtriebsteil 26 eines Elektromotors mit Getriebe, der im Gehäuse 21 untergebracht ist, drehbeweglich um die Achse 25 b angelenkt. Das Abtriebsteil 26 kann beispielsweise durch den Keilschieber 20 der ersten Ausführungsform gebildet sein, wobei allerdings der zweite abgeschrägte Anschlag 11 c am Verriegelungsschieber 11 entfällt.

Der Elektromotor ist gegenüber seinem Pendant in der ersten Ausführungsform so ausgelegt, daß er ein relativ großes Drehmoment für eine längere, im Minutenbereich liegende Zeitdauer auf die Welle 9 ausüben kann.

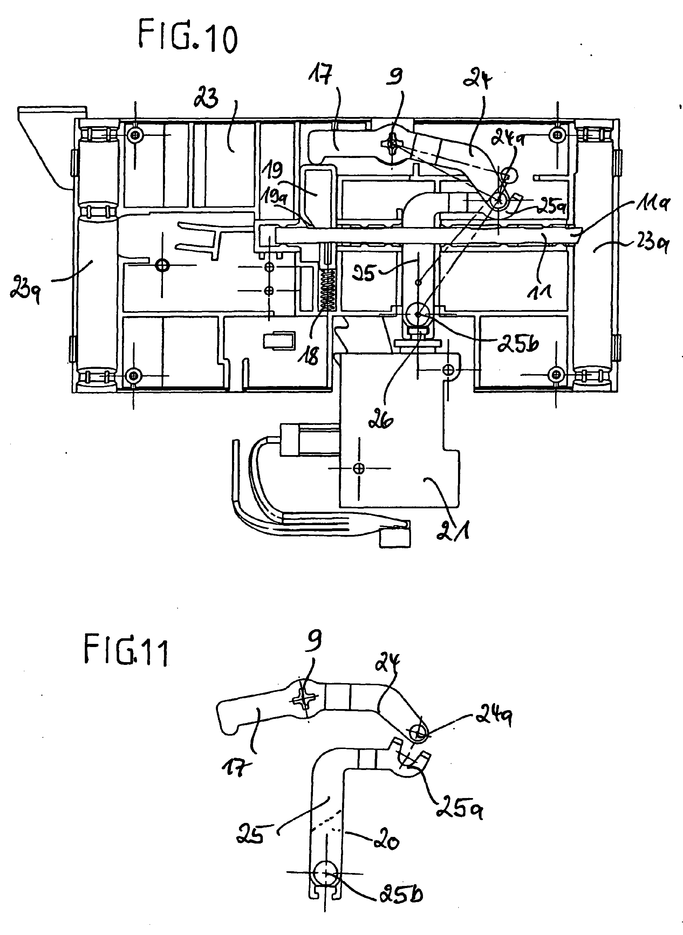

Wird der Elektromotor aktiviert, dann fährt das Abtriebsteil 26 mit dem daran angelenkten Winkelhebel 25 aus (die Fig. 10 zeigt den entsprechenden Hub), wobei über die offene Klauen-BolzenVerbindung 24 a, 25 a der doppelseitige Hebel 17, 24 gegen den Uhrzeigersinn verschwenkt wird. Der Hebelteil 17 drückt dabei auf den vertikalen Entriegelungsschieber 19, der, wie bereits im Zusammenhang mit der ersten Ausführungsform beschrieben, über seine Schräge 19 a und den abgeschrägten Anschlag 11 b (Fig. 9) den Verriegelungsschieber 11 aus der Verriegelung mit der jeweiligen Kerbe in der Kopfstützen-Tragstange zieht, so daß die Kopfstütze aufgrund der Schwerkraft in die unterste Position zurückfällt.

Wie die Fig. 9 zeigt, ist ferner auf der Welle 9, wie im Fall der ersten Ausführungsform, der erste, abgehende Hebel 16 drehfest angebracht, der in lösendem Wirkeingriff mit dem Betätigungsarm 14 a der vorgespannten Sperrklinke 14 steht. Wird die Welle 9 daher, wie beschrieben, durch den Motor gedreht, wirkt gleichzeitig der Hebel 16 entriegelnd gegen die Kraft der Klinkenfedern 15 auf die Sperrklinke 14 ein. Durch Aktivierung des Elektromotors, der so ausgelegt ist, daß er die Vorspannkraft der Klinkenfedem 15 zu überwinden vermag, können daher gleichzeitig die Kopfstütze und die Wiedereinfahrsperre des Überrollbügels ohne manuelle Unterstützung entriegelt werden, so daß beide Hände des Fahrzeugführers für das Einschieben des Überrollbügels frei sind.

Für die Aktivierung des Elektromotors zwecks einfacher Zurückstellung der Kopfstütze genügt, wie bislang, ein einfacher Taster am Amaturenbrett.

Zum Einfallen der Kopfstütze wird der Taster kurz gedrückt, eine elektrisch Steuerung erkennt, daß die Kopfstütze ausgezogen ist und beaufschlagt den Getriebemotor ca. 0,5 -1,0 Sekunden mit Strom.

Nach einer sogenannten Sicherheitslauslösung des Überrollbügels erkennt die Steuerung, daß der Überrollbügel aufgestellt ist.

Wird nun der Taster kurz betätigt, beaufschlagt die Steuerung den Getriebemotor ca. 60 Sekunden lang mit Strom.

Zeit genug, für den Fahrer den Überrollbügel beidhändig einzuschieben.

Fällt der Elektromotor einmal aus, dann kann jederzeit das System manuell über den Betätigungshebel 8 gleichzeitig entriegelt werden, weil der Betätigungs-Hebel 24 mit seinem Bolzen 24 a frei auf der Klaue 25 a aufliegt.

Prinzipiell kann bei der zweiten Ausführungsform aber auch auf diese manuelle Redundanz verzichtet werden.

Im übrigen gilt das zu den Figuren 1 bis 7 gesagte entsprechend.

Es ist auch denkbar, die erste Ausführungsform so zu gestalten, daß ein beidhändiges Reversieren möglich ist, indem dem Entriegelungshebel 8 für die Dauer des Reversierens ein mechanischer Selbsthaltekreis zugeordnet wird. Der manuell gedrückte Entriegelungshebel bleibt dann bis zum Lösen der Selbsthaltung gedrückt, d.h. die gemeinsame Entriegelung bleibt auch nach dem Loslassen des Entriegelungshebels bestehen, so daß beide Hände für das Reversieren des Überrollkörpers zur Verfügung stehen.

### Bezugszeichenliste

- 1: Überrollbügel
- 2: Führungsblock
- 3: Kassette
- 4: Blechgehäuse
- 5, 6: Tragstangen (Führungsstäbe)
- 7: Abdeckblech
- 8: Entriegelungshebel
- 9: Welle
- 10: Einkerbungen (Rasten)
- 11: Verriegelungsschieber
- 11 a: Verriegelungsnasen
- 11 b,: erster abgeschrägter Anschlag
- 11 c: zweiter abgeschrägter Anschlag
- 12: Vorspannfeder
- 13: Rastdorn
- 14: Sperrklinke
- 14 a: Betätigungsarm
- 15: Klinkenfedem
- 16: erster Hebel
- 17: zweiter Hebel
- 18: Vorspannfeder
- 19: erster Entriegelungsschieber
- 19 a: Schräge
- 20: zweiter Entriegelungsschieber
- 21: Gehäuse für Elektromotor mit Getriebe
- 22: Endschalter
- 23: Kunststoffgehäuse
- 23 a: Führungsschalen
- 24: Betätigungshebel
- 24 a: Bolzen
- 25: Winkelhebel
- 25 a: Klaue
- 25 b: Drehachse
- 26: Abriebsteil

## Patentansprüche

1. Überrollschutzsystem für Kraftfahrzeuge, das fahrzeugsitzbezogen einen sensorgesteuert ausfahrbaren Überrollkörper (1) mit kombinierter, eigenständig verstellbarer Kopfstütze (4, 5, 6) aufweist, und das eine lösbare Verriegelungseinrichtung (13, 14) für den ausgefahrenen Überrollkörper (1) sowie eine lösbare Verriegelungseinrichtung (10, 11) für die jeweilige Stellposition der Kopfstütze (4, 5, 6) besitzt, **dadurch gekennzeichnet, daß** eine drehbetätigbare, fahrzeugfest gelagerte Welle (9) vorgesehen ist, die mit mindestens zwei abgehenden Hebeln in Dreh-Wirkverbindung steht, von denen der erste Hebel (16) in lösende Wirkverbindung mit der Verriegelungseinrichtung (13, 14) für den Überrollkörper (1) und der zweite Hebel (17) in lösende Wirkverbindung mit der Verriegelungseinrichtung (10, 11) für die Kopfstütze (4, 5, 6) bringbar ist.

2. Überrollschutzsystem nach Anspruch 1, **dadurch gekennzeichnet, daß** ein fahrzeugfester Führungsblock (2) für die Führung des aufstellbaren Überrollkörpers (1) vorgesehen ist, der Führungen zum Verstellen der Kopfstütze über ihre zwei Führungsstäbe (5, 6) aufweist.

3. Überrollschutzsystem nach Anspruch 2, **dadurch gekennzeichnet, daß** die Verriegelungseinrichtung für den Überrollkörper (1) ein mit ihm verbundenes Zahnsegment, vorzugsweise einen Rastdorn (13), in Verbindung mit einer im Führungsblock (2) drehbar angelenkten, im verriegelnden Sinne vorgespannten Sperrklinke (14), die einen Betätigungsarm (14 a) besitzt, aufweist, und daß die Verriegelungsvorrichtung für die Kopfstütze aus Einkerbungen (10) in mindestens einem der Führungsstäbe (6) der Kopfstütze in Verbindung mit einem länglichen linear bewegbaren, und in Verriegelungsrichtung vorgespannten Verriegelungsschieber (11), der eine zu den Einkerbungen komplementäre Verriegelungsnase (11 a) besitzt, besteht.

4. Überrollschutzsystem nach Anspruch 3, **dadurch gekennzeichnet, daß** von den beiden abgehenden Hebeln des Entriegelungshebels (8) der erste Hebel (16) in anliegender Wirkverbindung mit dem Betätigungsarm (14 a) der Sperrklinke (14) und der zweite Hebel (17) in Wirkverbindung mit dem länglichen Verriegelungsschieber (11) steht.

5. Überrollschutzsystem nach Anspruch 4, **dadurch gekennzeichnet, daß** der zweite Hebel (17) in Wirkverbindung mit einem vertikal geführten ersten Entriegelungsschieber (19), steht, der an seinem freien Ende eine Schräge (19 a) aufweist, die in Wirkverbindung mit einer komplementären Schräge an einem Anschlag (11 b) am länglichen Verriegelungsschieber (11) steht.

6. Überrollschutzsystem nach Anspruch 5, **dadurch gekennzeichnet, daß** dem länglichen Entriegelungsschieber (11) ein Endschalter (22) zur Abfrage der eingefahrenen Position der Kopfstütze zugeordnet ist.

7. Überrollschutzsystem nach einem der Ansprüche 1 bis 6, **dadurch gekennzeichnet, daß** an der Welle (9) ein manuell betätigbarer Entriegelungshebel (8) verdrehfest angebracht ist.

8. Überrollschutzsystem nach einem der Ansprüche 1 bis 7, **dadurch gekennzeichnet, daß** der Entriegelungshebel (8) aus einem Blechformteil besteht und im Polster des zugehörigen Fahrzeugsitzes versteckt angeordnet ist.

9. Überrollschutzsystem nach Anspruch 7 oder 8, **dadurch gekennzeichnet, daß** der längliche Entriegelungsschieber (11) einen zweiten abgeschrägten Anschlag (11 c) aufweist, der in Wirkverbindung mit einem zweiten, kopfseitig komplementär abgeschrägten und elektromotorisch vertikal bewegbaren Entriegelungsschieber (20) steht.

10. Überrollschutzsystem nach einem der Ansprüche 1 bis 6 und/oder einem der Ansprüche 7, 8, **dadurch gekennzeichnet, daß** an der Welle (9) ein Betätigungsglied (24) verdrehfest angebracht ist, das in einer Dreh-Wirkverbindung mit einem Elektromotor steht.

11. Überrollschutzsystem nach Anspruch 10, **dadurch gekennzeichnet, daß** das Betätigungs-Glied durch einen Betätigungshebel (24) gebildet ist, der an einem freien Ende einen Bolzen (24 a) besitzt, welcher im Wirkkontakt mit einer Klaue (25 a) eines mit dem Abtriebsteil (26) des Elektromotors verbundenen Winkelhebels (25) steht.

12. Überrollschutzsystem nach einem der Ansprüche 7 bis 11, **dadurch gekennzeichnet, daß** der längliche Verriegelungsschieber vorzugsweise ein Spritzguß- oder metallisches Feingussteil ist, und die abgehenden Hebel (16, 17, 24) sowie die Entriegelungsschieber (19, 20) ebenfalls vorzugsweise Spritzgussteile oder Feingussteile sind.

13. Überrollschutzsystem nach einem der Ansprüche 7 bis 12, **dadurch gekennzeichnet, daß** die Entriegelungskomponenten (11,16,17,19,20,24,25) in einem fahrzeugfest, vorzugsweise im Führungsblock (2) montierten Kunststoffgehäuse (23) untergebracht sind, in welchem auch die drehbetätigbare Welle (9) gelagert ist.

## Claims

1. Rollover protection system for motor vehicles comprising a rollover body (1), which can be deployed in a sensor-controlled manner in relation to the vehicle seats and has a combined, independently adjustable headrest (4, 5, 6), and having a releasable locking device (13, 14) for the deployed rollover body (1) as well as a releasable locking device (10, 11) for the respective set position of the headrest (4, 5, 6), **characterised in that** a shaft (9), which can be rotatably actuated, is provided, the latter being supported rigid with the vehicle and connected in a rotatably active manner to at least two projecting levers, the first lever (16) of which can be actively connected in a releasing manner to the locking device (13, 14) for the rollover body (1) and the second lever (17) of which can be actively connected in a releasing manner to the locking device (10, 11) for the headrest (4, 5, 6).

2. Rollover protection system according to Claim 1, **characterised in that** a guide block (2), which is rigid with the vehicle, is provided to guide the raisable rollover body (1), which block comprises guides for adjusting the headrest via its two guide rods (5, 6).

3. Rollover protection system according to Claim 2, **characterised in that** the locking device for the rollover body (1) comprises a toothed segment, preferably a detent pin (13), which is connected to the body, in conjunction with a pawl (14) which is rotatably articulated in the guide block (2), is biased in the locking direction and has an actuating arm (14a), and that the locking device for the headrest consists of notches (10) in at least one of the guide rods (6) of the headrest in conjunction with an elongate locking slide (11) which can be moved in a linear manner, is biased in the locking direction and has a locking lug (11a) which is complementary to the notches.

4. Rollover protection system according to Claim 3, **characterised in that**, of the two projecting levers of the unlocking lever (8), the first lever (16) is actively connected in an adjoining manner to the actuating arm (14a) of the pawl (14) and the second lever (17) is actively connected to the elongate locking slide (11).

5. Rollover protection system according to Claim 4, **characterised in that** the second lever (17) is actively connected to a vertically guided first unlocking slide (19) which comprises, at its free end, a bevel (19a) which is actively connected to a complementary bevel on a stop (11b) on the elongate locking slide (11).

6. Rollover protection system according to Claim 5, **characterised in that** a limit switch (22) for sensing the retracted position of the headrest is associated with the elongate unlocking slide (11).

7. Rollover protection system according to any one of Claims 1 to 6, **characterised in that** an unlocking lever (8), which can be manually actuated, is fitted to the shaft (9) in a non-rotatable manner.

8. Rollover protection system according to any one of Claims 1 to 7, **characterised in that** the unlocking lever (8) consists of a shaped sheet-metal part and is disposed in a concealed manner in the upholstery of the associated vehicle seat.

9. Rollover protection system according to Claim 7 or 8, **characterised in that** the elongate unlocking slide (11) comprises a second bevelled stop (11c) which is actively connected to a second unlocking slide (20) which is bevelled in a complementary manner at the top and can be moved vertically by electromotive means.

10. Rollover protection system according to any one of Claims 1 to 6 and/or any one of Claims 7, 8, **characterised in that** an actuating member (24) is fitted to the shaft (9) in a non-rotatable manner and is connected in a rotatably active manner to an electric motor.

11. Rollover protection system according to Claim 10, **characterised in that** the actuating member is formed by an actuating lever (24) which has, at a free end, a pin (24a) which is in active contact with a claw (25a) of an elbow lever (25) connected to the driven part (26) of the electric motor.

12. Rollover protection system according to any one of Claims 7 to 11, **characterised in that** the elongate locking slide is preferably a die casting or a metallic precision casting, and the projecting levers (16, 17, 24) as well as the unlocking slides (19, 20) are likewise preferably die castings or precision castings.

13. Rollover protection system according to any one of Claims 7 to 12, **characterised in that** the unlocking components (11, 16, 17, 19, 20, 24, 25) are accommodated in a plastics housing (23) which is rigid with the vehicle, is preferably mounted in the guide block (2) and in which the shaft (9), which can be rotatably actuated, is also supported.

## Revendications

1. Système de protection au retournement pour des véhicules automobiles, qui présente, associé à un siège du véhicule, un corps (1) de protection au retournement pouvant être déployé sous la commande d'un capteur et pourvu d'un appuie-tête combiné (4, 5, 6) à réglage indépendant, et qui possède un dispositif de verrouillage libérable (13,14) pour le corps (1) de protection au retournement déployé ainsi qu'un dispositif de verrouillage libérable (10, 11) pour la position réglée respective de l'appuie-tête (4, 5, 6), **caractérisé en ce qu'**il est prévu un arbre (9) monté de manière solidaire du véhicule et pouvant être actionné en rotation, qui se trouve en liaison fonctionnelle de rotation avec au moins deux leviers de sortie, parmi lesquels le premier levier (16) peut être amené en liaison fonctionnelle de libération avec le dispositif de verrouillage (13, 14) pour le corps (1) de protection au retournement, et le deuxième levier (17) en liaison fonctionnelle de libération avec le dispositif de verrouillage (10, 11) pour l'appuie-tête (4, 5, 6).

2. Système de protection au retournement selon la revendication 1, **caractérisé en ce qu'**il est prévu un bloc de guidage (2) solidaire du véhicule pour le guidage du corps relevable (1) de protection au retournement, bloc qui présente des guides pour le réglage de l'appuie-tête au moyen des deux tiges de guidage (5, 6) de ce dernier.

3. Système de protection au retournement selon la revendication 2, **caractérisé en ce que** le dispositif de verrouillage pour le corps (1) de protection au retournement présente un segment denté assemblé à ce dernier, de préférence une broche de crantage (13), en liaison avec un cliquet d'arrêt (14), articulé en rotation dans le bloc de guidage (2) et précontraint dans le sens de verrouillage, qui possède un bras d'actionnement (14a), et **en ce que** le dispositif de verrouillage pour l'appuie-tête est constitué d'encoches (10) dans au moins une (6) des tiges de guidage de l'appuie-tête, conjointement avec un coulisseau de verrouillage oblong (11), linéairement mobile et précontraint dans la direction de verrouillage, qui possède un ergot de verrouillage (11a) complémentaire des encoches.

4. Système de protection au retournement selon la revendication 3, **caractérisé en ce que**, parmi les deux leviers de sortie du levier de déverrouillage (8), le premier levier (16) se trouve en liaison fonctionnelle d'application avec le bras d'actionnement (14a) du cliquet d'arrêt (14), et le deuxième levier (17) en liaison fonctionnelle avec le coulisseau de verrouillage oblong (11).

5. Système de protection au retournement selon la revendication 4, **caractérisé en ce que** le deuxième levier (17) se trouve en liaison fonctionnelle avec un premier coulisseau de déverrouillage (19) guidé verticalement, qui présente à son extrémité libre un chanfrein (19a) qui se trouve en liaison fonctionnelle avec un chanfrein complémentaire sur une butée (11b) sur le coulisseau de verrouillage oblong (11).

6. Système de protection au retournement selon la revendication 5, **caractérisé en ce qu'**un commutateur (22) de fin de course pour consulter la position rentrée de l'appuie-tête est associé au coulisseau de verrouillage oblong (11).

7. Système de protection au retournement selon l'une quelconque des revendications 1 à 6, **caractérisé en ce qu'**un levier de déverrouillage (8) pouvant être actionné manuellement est monté en solidarité de rotation sur l'arbre (9).

8. Système de protection au retournement selon l'une quelconque des revendications 1 à 7, **caractérisé en ce que** le levier de déverrouillage (8) est constitué d'une pièce façonnée en tôle et est disposé caché dans le rembourrage du siège de véhicule associé.

9. Système de protection au retournement selon la revendication 7 ou 8, **caractérisé en ce que** le coulisseau de déverrouillage oblong (11) présente une deuxième butée chanfreinée (11c), qui se trouve en liaison fonctionnelle avec un deuxième coulisseau de déverrouillage (20), chanfreiné de façon complémentaire du côté de tête et pouvant être déplacé verticalement par moteur électrique.

10. Système de protection au retournement selon l'une quelconque des revendications 1 à 6 et/ou l'une des revendications 7, 8, **caractérisé en ce qu'**un organe d'actionnement (24), qui se trouve en liaison fonctionnelle de rotation avec un moteur électrique, est monté en solidarité de rotation sur l'arbre (9).

11. Système de protection au retournement selon la revendication 10, **caractérisé en ce que** l'organe d'actionnement est formé par un levier d'actionnement (24) qui possède à une extrémité libre un axe (24a) qui se trouve en contact actif avec une griffe (25a) d'un levier coudé (25) relié à l'élément mené (26) du moteur électrique.

12. Système de protection au retournement selon l'une quelconque des revendications 7 à 11, **caractérisé en ce que** le coulisseau de verrouillage oblong est de préférence une pièce moulée par injection ou une pièce moulée de précision métallique, et les leviers de sortie (16, 17, 24) ainsi que les coulisseaux de déverrouillage (19, 20) sont également de préférence des pièces moulées par injection ou des pièces moulées de précision.

13. Système de protection au retournement selon l'une quelconque des revendications 7 à 12, **caractérisé en ce que** les éléments de déverrouillage (11, 16, 17, 19, 20, 24, 25) sont logés dans un boîtier (23) en matière plastique monté de manière solidaire du véhicule, de préférence dans le bloc de guidage (2), boîtier dans lequel est également monté l'arbre (9) pouvant être actionné en rotation.
